# EUROPÄISCHE PATENTANMELDUNG

(11) **EP 4 470 979 A1**
(43) Veröffentlichungstag der Anmeldung: **04.12.2024**
(21) Anmeldenummer: 23176884.7
(22) Anmeldetag: 02.06.2023
(51) Int. Cl.: C03C 3/093, C03C 3/097, C03C 8/04, C03C 17/04, C04B 37/00, H01C 17/065, C03C 27/04, G01K 1/00

(54) **BRECHBARER TEMPERATURSENSOR MIT ROHS KONFORMEM FIXIERTROPFEN**

(71) Anmelder: Yageo Nexensos GmbH, 63801 Kleinostheim (DE)
(72) Erfinder: Urfels, Stephan, 63801 Kleinostheim (DE); Loose, Thomas, 63801 Kleinostheim (DE); Asmus, Tim, 63801 Kleinostheim (DE); Reul, Roland, 63801 Kleinostheim (DE); Droste, Tobias, 63801 Kleinostheim (DE)
(74) Vertreter: Meissner Bolte Partnerschaft mbB

(57) **Zusammenfassung**

Die vorliegende Erfindung betrifft Glaszusammensetzungen, insbesondere Fixiertropfen, ein passives Bauelement, ein Verfahren zur Herstellung von bedrahteten passiven Bauelement, ein passives Bauelement erhältlich durch dieses Verfahren, sowie die Verwendung solcher Glaszusammensetzung zur Zugentlastung von Anschlussdrähten an passive Bauelementen.

## Beschreibung

Die vorliegende Erfindung betrifft Glaszusammensetzungen, insbesondere Fixiertropfen, ein passives Bauelement, ein Verfahren zur Herstellung eines passiven Bauelements, ein passives Bauelement erhältlich durch dieses Verfahren, sowie die Verwendung solcher Glaszusammensetzungen zur Zugentlastung von Anschlussdrähten an passiven Bauelementen.

Unter passiven Bauelementen werden in der Regel jene Bauelemente verstanden, die, im Gegensatz zu aktiven Bauelementen, keine Verstärkerwirkung zeigen und keine Steuerungsfunktion besitzen. Beispiele für passive Bauelemente wären z.B. Widerstände, Kondensatoren, Sensoren und Heizer.

Im Sinne der Erfindung umfasst ein passives Bauelement vorzugsweise ein Substrat, eine mehrlagige Struktur, die sich auf dem Substrat befindet, mindestens einen Anschlussdraht und einer Glaszusammensetzung zur Zugentlastung des mindestens einen Anschlussdrahts. Die mehrlagige Struktur wiederum umfasst vorzugsweise mindestens ein Anschlusspad, an dem der mindestens eine Anschlussdraht fixiert ist, mindestens eine elektrische Leiterbahn, und mindestens eine dielektrische Schicht, beispielsweise eine siebgedruckte Glasschicht, die zwischen der Glaszusammensetzung und dem Substrat angeordnet ist und die Leiterbahn bedeckt, aber das Anschlusspad im Wesentlichen freilässt.

Die Glaszusammensetzung, insbesondere Fixiertropfen, dient vorwiegend zur Zugentlastung des mindestens einen Anschlussdrahts. Hierdurch wird einerseits gewährleistet, dass der mindestens eine Anschlussdraht sicher fixiert ist und anderseits schützt die Glaszusammensetzungen die von ihr abgedeckten Bereiche vor möglichen äußeren Einflüssen wie z.B. auskondensierter Luftfeuchtigkeit. Weiterhin weist die Glaszusammensetzung auch eine schützende Funktion auf, so kann die Glaszusammensetzung beispielsweise die Anschlussdrähte vor einem elektrischen Kurzschluss durch Kontakt mit einem leitfähigen Gehäuse schützen.

Einzelanfertigungen von passiven Baudelementen sind für die Massenproduktion in der Regel zu kostenintensiv. Folglich werden für die Massenproduktion von passiven Bauelementen, mehrere Strukturen auf einem gemeinsamen Substrat angeordnet, wobei mindestens ein Anschlussdraht an der jeweiligen Struktur mechanisch fixiert ist. Durch das Auftragen einer durchgängigen Glaszusammensetzung, welche als durchgängige Schicht über mehrere Strukturen verläuft und diese zumindest anteilig bedeckt, werden die Anschlussdrähte zugentlastet. Das anschließende Vereinzeln der Bauelemente umfasst dann das Durchtrennen des Substrates und der Glaszusammensetzungen.

Für das Vereinzeln der passiven Bauelemente stehen verschiedene Möglichkeiten zur Auswahl, wobei die passiven Bauelemente in der Regel durch Sägen vereinzelt werden. Diese Vorgehensweise ist zwar mit einem Mehraufwand verbunden, insbesondere wenn die passiven Bauelemente ein hartes Substrat, z.B. auf Basis von Al₂O₃, umfassen, ist allerdings unabhängig von der Glaszusammensetzung anwendbar und mit geringen Ausfällen verbunden. Alternativ bietet sich die deutlich weniger arbeitsintensive und damit kostengünstigere Vereinzelung durch Brechen an. Diese Methode ist allerdings mit der Herausforderung verbunden, dass das Brechen von Glas oftmals mit höheren Ausfallraten verbunden ist.

Da die meisten Glaszusammensetzungen nicht definiert brechen, weisen Gläser, die nicht für diese Art der Vereinzelung optimiert wurden, schiefe Bruchflächen oder den Bruch an der falschen Stelle auf, also nicht durch die Sollbruchstelle im Substrat. Vorteilhaft dafür ist eine Glaszusammensetzung, die die Zugspannungen, die beim Brechen auf die Fixierung wirken, so lange aushalten kann, dass zuerst die Sollbruchstelle im Substrat bricht, die somit die Bruchposition in der Glaszusammensetzung bestimmt. Besonders vorteilhaft ist eine Glaszusammensetzung mit einer hohen Elastizität, also einem E-Modul von ungefähr 45 GPa oder weniger, um diese Bruchzähigkeit aufzuweisen.

Vorzugsweise weist die erfindungsgemäße Glaszusammensetzung ein Elastizitätsmodul von 45 GPa oder weniger auf.

Unter der Bruchfläche wird die durch die Vereinzelung neu entstandene Fläche eines passiven Bauteils verstanden. In diesem Zusammenhang sind beispielsweise Mikrorisse oder Abplatzungen an der Bruchfläche zu nennen. Weiterhin können die Mikrorisse auch in das Innere der Glaszusammensetzung propagieren, wobei diese nur schwer zu erkennen sind. Passive Bauteile mit solchen mangelhaft gebrochenen Glaszusammensetzungen sind oft nicht für die weitere Verwendung geeignet. Noch schwerwiegender sind Schädigungen (wahrscheinliche Mikrorisse) im Inneren der der Glaszusammensetzung, die durch den mechanischen Stress beim Brechen über den Drähten entstehen, wo die Glaszusammensetzung am dünnsten ist. Diese sind optisch nicht erkennbar und propagieren erst bei thermischer Belastung des Bauteils durch das Glasvolumen. Es zeigen sich dann feine Haarrisse über den Anschlussdrähten.

Aus dem Stand der Technik bekannte bleihaltige Glaszusammensetzungen weisen vorteilhafte mechanische Stabilität, gute elektrische Eigenschaften und gute Brecheigenschaften auf. Hieraus leitet sich ein besonders vorteilhaftes Herstellungsverfahren ab, nämlich, dass die Glaszusammensetzung als durchgängiger Strang über die Anschlussdrähte aufgetragen werden kann und anschließend die passiven Bauelemente vereinzelt werden können, ohne, dass es zu hohen Ausfallquoten infolge von fehlerhaft beziehungsweise an der falschen Stelle gebrochenem Glas kommt.

Allerdings werden zum Schutz der Umwelt bleifreie Glaszusammensetzungen gefordert. Im Zuge dessen hat die EU durch die RoHS-Richtlinien die Verwendung bestimmter gefährlicher Stoffe in Elektro- und Elektronikgeräten beschränkt. Insbesondere die spezifizierte Höchstgrenze für Blei von 1000 ppm, verlangt daher, dass bestehende Glaszusammensetzungen für die Verwendung in der genannten technischen Anwendung entsprechend angepasst werden.

Ein grundlegendes Problem, welches sich bei der Bereitstellung von bleifreien Glaszusammensetzungen stellt, ist daher die bleihaltigen Bestandteile zu ersetzen und gleichzeitig die vorteilhaften Eigenschaften, insbesondere die guten Brecheigenschaften beizubehalten.

Eine Möglichkeit, um zumindest die Anforderung an die Brechbarkeit zu umgehen, wäre die Glaszusammensetzung nur punktuell an die Anschlussdrähte anzubringen, sodass das Durchbrechen der Glaszusammensetzung entfallen würde. Diese Vorgehensweise wäre zwar prinzipiell möglich, wäre allerdings ebenso mit einem Mehraufwand verbunden und würde folglich den eingesparten Mehraufwand, der durch das Vermeiden des Durchsägens gewonnen wurde, wieder ausgleichen.

Bleifreie, aber alkalihaltige Gläser zeigen zwar gute Brecheigenschaften sind allerdings nicht als Glaszusammensetzung für passive Bauelemente geeignet. Ein Problem, welches bei solchen Gläsern verstärkt zum Tragen kommt, ist das Auftreten von Polarisationseffekten, welche auch als Kondensatoreffekte bekannt sind, welche z.B. in der US 2021/0396590 A1, die hiermit vollumfänglich einbezogen ist. Im Kontext der Anmeldung wird unter Polarisationseffekten insbesondere verstanden, dass es zu einer Ladungstrennung an den Anschlussdrähten in der Glaszusammensetzung kommt. Beim Anlegen eines elektrischen Stroms kommt es folglich zu einer Abweichung der gemessenen elektrischen Spannung von dem stationären Wert. Im Folgenden wird diese Spannungsdifferenz als Spannungsoffset bezeichnet. Da der Polarisationseffekt, und damit der Spannungsoffset, sich nicht linear in Abhängigkeit von der Temperatur verändert, ist es nicht möglich diesen Effekt durch einen Faktor zu berücksichtigen.

Die Größe des gemessenen Polarisationseffektes ist von der genauen Messmethode oder den verwendeten Messzeit abhängig und kann gemäß der folgenden Messmethode bestimmt werden:
Der Widerstand des passiven Bauteils, insbesondere der Temperatursensoren, wird auf zwei Arten gemessen.
a) Messung mit Umpolen der Spannung.
Es wird eine Spannung von +250 mV angelegt, ein evtl. vorhandener Kondensator wurde dabei aufgeladen und nach einer Minute der Widerstand gemessen.

Dann wurde die Spannung umgepolt und eine Minute nach Umpolung erneut gemessen. Aus beiden Messungen wurde ein erster Mittelwert gebildet. Eine eventuell vorliegende Thermospannung wird hierdurch rechnerisch kompensiert. Aus dem Mittelwert beider Messungen wurde die Temperatur 1 des Sensors bestimmt.
b) Schnelle Messung mit Trennung der Spannungsquelle. Hierbei wird der Sensor im Messgerät intern alle 0,2 s von der Spannungsquelle getrennt, die dann vorhandene Eingangsspannung gemessen und von der Messspannung rechnerisch abgezogen. Eine eventuell vorhandene Thermospannung wird hierdurch ebenfalls kompensiert. Auch hier wird nach etwa Minute der Widerstand gemessen, die Spannung umgepolt und nach einer weiteren Minute erneut gemessen und ein zweiter Mittelwert gebildet. Aus diesem zweiten Mittelwert wurde eine Temperatur 2 bestimmt.

Folglich wird im Kontext der vorliegenden Offenbarung der Polarisationseffekt als Differenz der Temperatur 1 und der Temperatur 2 angegeben.

Wenn der Betrag der Differenz über 0,5°C liegt, wird der Polarisationseffekt als stark bewertet.

Der Spannungsoffset kann insbesondere bei hohen Temperaturen so groß werden, dass die geforderten Toleranzklassen für passive Bauelemente nicht über den gesamten Temperaturbereich eingehalten werden können. Das gilt insbesondere für bedrahtete Sensorelemente, deren Widerstand größer als 500 Ohm beträgt. Im Rahmen der Entwicklungsarbeit der vorliegenden Anwendung wurde überraschenderweise festgestellt, dass der Gehalt an Lithium- und Natrium(ionen) hauptsächlich für die Stärke des Spannungsoffsets in bleifreien Glaszusammensetzungen verantwortlich ist.

Bei passiven Bauelementen mit Nennwiderständen unter 1000 Ohm ist der Polarisationseffekt schwerer dynamisch messbar, er fällt bei der Genauigkeit der mit dem Bauteil ermittelten Messwerte allerdings geringer aus.

In diesem Fall wird der normierte Polarisationseffekt durch den Polarisationseffekt, der sich bei einem passiven Bauteil mit gleicher Geometrie der Anschlussdrähte und Glaszusammensetzung, aber mit einem temperaturabhängigen Nennwiderstand von 1000 Ohm zwischen den Anschlussdrähten ergibt, definiert. Im Weiteren wird die Bezeichnung Kondensatoreffekt als Synonym für den so definierten normierten Kondensatoreffekt verwendet. Damit sind der Begriff und die Messvorschrift des Kondensatoreffektes auf alle passiven Widerstände und insbesondere auch auf Heizer mit Widerständen unter 1000 Ohm in nachvollziehbarer Weise ausgeweitet.

Bei dieser Messmethode, aber auch bei der Funktionalität des passiven Bauelementes ist die Substratqualität ebenfalls nicht unerheblich, da auch darüber ein Kurzschlussstrom fließen kann. Besonders bei passiven Bauteilen, die Substrate mit spezifischen Widerständen über 10⁹ Ωcm (bei 500°C) beinhalten, kann der Isolationswiderstand des Fixiertropfens den Messfehler beeinflussen. Daher sind unter anderem Al₂O₃-Substrate, MgO Substrate, viele Glassubstrate, oder einige dotierte Zirkonoxidsubstrate sowie deren Mischungen, oder Schichtungen als Substrate für die passiven Bauteile mit der erfindungsgemäßen Glaszusammensetzung geeignet.

Das gilt ebenso für passive Bauteile auf besser leitfähigen Substraten, wenn eine genügend hohe Isolationswirkung durch mindestens eine nichtleitfähige Schicht ausreichend hoher Durchschlagsfestigkeit zwischen der leitfähigen Struktur und dem Substrat aufgebracht wurde. Vorteilhaft für die Minimierung des Messfehlers des Bauteils ist eine Kombination von Substrat, eventuell notwendiger elektrische Isolationsschicht und der erfindungsgemäßen Glaszusammensetzung in der Art, dass eine Grenze von 17 MΩ bei 500°C als gesamter Isolationswiderstand zwischen der Widerstandsstrecke übertroffen wird. Ganz besonders vorteilhaft zur präzisen Messung ist ein passives Bauteil mit Fixiertropfen geeignet, wenn der Isolationswiderstand zwischen der Widerstandsstrecke 17 MΩ bei 550°C übertrifft.

Da der Polarisationseffekt zu einer Abnahme des Isolationswiderstands bei hohen Temperaturen führt und gleichzeitig in Bauelementen mit elektrisch leitfähigen Strukturen mit positivem Temperaturkoeffizienten (PTC) der Widerstand ansteigt, ist die Kombination von solchen Strukturen mit der erfindungsgemäßen Glaszusammensetzung vorteilhaft.

Die Aufgabe der vorliegenden Erfindung besteht darin, eine Glaszusammensetzung bereitzustellen, welche nach dem Aufbringen auf ein Substrat, gebrochen werden kann und vorstehend genannte Nachteile bei dieser Art der Vereinzelung minimiert und gleichzeitig auf umweltschädliche und die elektrischen Eigenschaften verschlechternde Bestandteile verzichtet. Insbesondere besteht die Aufgabe der vorliegenden Erfindung darin, eine Glaszusammensetzung, insbesondere Fixiertropfen, zur Zugentlastung von Anschlussdrähten an passiven Baudelementen auf einem anorganischen Substrat, bereitzustellen, wobei die Glaszusammensetzung geringe Mengen an Na und Li aufweist und weniger als 1000 ppm Blei umfasst.

Diese Aufgabe wurde überraschenderweise durch eine Glaszusammensetzung gemäß Anspruch 1 gelöst, insbesondere durch eine Glaszusammensetzung, insbesondere Fixiertropfen, zur Zugentlastung von Anschlussdrähten an passiven Bauelementen, insbesondere Sensoren, vorzugsweise Temperatursensoren, oder Heizern auf einem anorganischen Substrat, insbesondere Metalloxid-, Halbleiter- und/oder Glassubstrat, wobei die Glaszusammensetzung SiO₂, Al₂O₃, B₂O₃ und ZnO umfasst,
dadurch gekennzeichnet, dass
die Glaszusammensetzung,
weniger als 1000 ppm Blei umfasst, und dass die Glaszusammensetzung weniger als 2 Gew.-% Na, weniger als 0,2 Gew.-% Li, und/oder weniger als 2 Gew-% als Summe von Na und Li umfasst,
jeweils gemessen mittels ICP, und bezogen auf das Gesamtgewicht der Glaszusammensetzung.

Die Mengen an Na und Li beziehen sich dabei vorzugsweise auf die Menge der Ionen Na⁺ und Li⁺, sodass im Rahmen der vorliegenden Offenbarung Na und Na⁺, bzw. Li oder Li⁺ gleichwertig verwendet werden können. Die gilt analog für Blei, das auch als entsprechendes Blei-Ion verstanden werden kann.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Die Konzentration von Lithium, Natrium und Blei in der erfindungsgemäßen Glaszusammensetzung wurde durch optische Emissionsspektrometrie mit induktiv gekoppeltem Plasma (ICP-OES) bestimmt. Die Methode des induktiv gekoppelten Plasmas beruht auf der Verwendung eines sehr heißen (ca. 10.000 K) Argon-Plasmas zur Anregung der optischen Emission der zu analysierenden Elemente. Vorzugsweise wird die Bleikonzentration gemäß der Norm IEC 62321-5: 2013 und die Konzentration an Lithium und Natrium gemäß DIN EN ISO 11885 gemessen.

Die Glaszusammensetzung zur Zugentlastung von Anschlussdrähten befindet sich dergestalt auf der Struktur, dass die Anschlusspads für die Anschlussdrähte bedeckt sind.

Vorteilhafterweise bedeckt die Glaszusammensetzung zumindest anteilig eine darunterliegende siebgedruckte Glasschicht. Hierdurch wird eine besonders hohe Haftkraft zwischen der Glaszusammensetzung und einer siebgedruckten Glasschicht erzielt. Dies ist insbesondere von Vorteil, da hierdurch weitgehend sichergestellt werden kann, dass die Glaszusammensetzung sich bei erhöhter mechanischer Belastung nicht vom passiven Bauelement löst.

Da passive Bauelemente während des Betriebs oder durch die Umgebungen erhöhten Temperaturen ausgesetzt sind, kann es z.B. in feuchter Atmosphäre zu einem Wasserschlag auf dem heißen passiven Baudelement kommen. In der Regel sind spezielle Schutzmaßnahmen zur Vermeidung des Temperaturschocks auf der Oberfläche des passiven Bauelements notwendig.

Vorteilhafterweise kann auf diese zusätzlichen Schutzmaßnahmen bei der erfindungsgemäßen Glaszusammensetzung verzichtet werden, da diese eine geringe Wärmeleitfähigkeit aufweist. Diese Eigenschaft ist insbesondere bei der bevorzugten Verwendung als Fixiertropfen auf einem passiven Bauelement vorteilhaft. Hierbei ist es ebenfalls vorteilhaft, dass die erfindungsgemäße Glaszusammensetzung einen geringen Ausdehnungskoeffizienten in Richtung quer zu einer darunterliegenden siebgedruckten Glasschicht aufweist.

Die erfindungsgemäße Glaszusammensetzung ist vorzugsweise dadurch gekennzeichnet, dass die Glaszusammensetzung zur Zugentlastung des mindestens einen Anschlussdrahts verschmelzbar oder versinterbar mit der mindestens einen siebgedruckten Glasschicht ist. Dabei können die Gläser zumindest in Bestandteilen ähnlich oder gleich sein alternativ sind die Gläser in ihren Bestandteilen verschieden, vorzugsweise sodass diese nicht miteinander verschmelzbar oder versinterbar sind.

Die erfindungsgemäße Glaszusammensetzung ist ferner vorzugsweise dadurch gekennzeichnet, dass die Glaszusammensetzung
von 20 bis 55 Gew.-%, bevorzugt von 25 bis 50 Gew.-%, Siliziumdioxid,
von 5 bis 15 Gew.-%, bevorzugt von 6 bis 14 Gew.-%, Boroxid, und
von 4 bis 18 Gew.-%, bevorzugt 5 bis 17 Gew.-%, Aluminiumoxid,
bezogen auf das Gesamtgewicht der Glaszusammensetzung, umfasst.

Noch bevorzugter umfasst die erfindungsgemäße Glaszusammensetzung zusätzlich von 5 bis 14 Gew.-%, bevorzugt von 6 bis 13 Gew.-%, Zinkoxid, bezogen auf das Gesamtgewicht der Glaszusammensetzung.

Da es sich bei der erfindungsgemäßen Glaszusammensetzung um ein inhomogenes Gemisch handeln kann, beziehen sich die angegebenen Gew.-% auf den jeweils durchschnittlichen Gehalt in der Glaszusammensetzung bzw. dem Fixiertropfen. Lokale Abweichungen der Gew.-% in der Glaszusammensetzung bzw. in dem Fixiertropfen sind möglich, gleichen sich aber zu den angegebenen Gew.-% aus.

Die erfindungsgemäße Glaszusammensetzung ist ferner vorzugsweise dadurch gekennzeichnet, dass die Glaszusammensetzung
von 35 bis 55 Gew.-% Siliziumdioxid,
von 9 bis 14 Gew.-% Boroxid,
von 6 bis 9 Gew.-% Zinkoxid,
von 4 bis 7 Gew.-% Strontiumoxid,
von 2 bis 5 Gew.-% Kaliumoxid,
oder
von 35 bis 55 Gew.-% Siliziumdioxid,
von 8 bis 15 Gew.-% Bismutoxid,
von 6 bis 11 Gew.-% Boroxid,
von 6 bis 10 Gew.-% Zinkoxid,
von 4 bis 8 Gew.-% Strontiumoxid,
von 2 bis 6 Gew.-% Kaliumoxid,
oder
von 20 bis 55 Gew.-% Siliziumoxid und Lanthanoxid
von 11 bis 14 Gew.-% Boroxid,
von 9 bis 13 Gew.-% Zinkoxid,
von 3 bis 6 Gew.-% Calciumoxid,
jeweils bezogen auf das Gesamtgewicht der die Glaszusammensetzung, umfasst.

Die erfindungsgemäße Glaszusammensetzung ist ferner noch bevorzugter dadurch gekennzeichnet, dass die Glaszusammensetzung
von 35 bis 55 Gew.-% Siliziumdioxid,
von 9 bis 14 Gew.-% Boroxid,
von 6 bis 9 Gew.-% Zinkoxid,
von 4 bis 7 Gew.-% Strontiumoxid,
von 2 bis 5 Gew.-% Kaliumoxid,
oder
von 35 bis 55 Gew.-% Siliziumdioxid,
von 8 bis 15 Gew.-% Bismutoxid,
von 6 bis 11 Gew.-% Boroxid,
von 6 bis 10 Gew.-% Zinkoxid,
von 4 bis 8 Gew.-% Strontiumoxid,
von 2 bis 6 Gew.-% Kaliumoxid,
oder
von 20 bis 55 Gew.-% Siliziumoxid und Lanthanoxid
von 11 bis 14 Gew.-% Boroxid,
von 9 bis 13 Gew.-% Zinkoxid,
von 3 bis 6 Gew.-% Calciumoxid,
jeweils bezogen auf das Gesamtgewicht der die Glaszusammensetzung, umfasst.

Da es in den meisten Fällen und Messmittelumgebungen nicht möglich ist, den Polarisationseffekt zu berücksichtigen, ist es wünschenswert, Glaszusammensetzungen zu verwenden, die nur einen geringen Polarisationseffekt aufweisen. Wie vorstehend erläutert, führen niedrige Konzentration an Natrium und Lithium in der Glaszusammensetzung zu einem geringen Polarisationseffekt, daher ist es besonders vorteilhaft, wenn die Glaszusammensetzungen nur geringe Mengen dieser Elemente aufweisen. Weiterhin wirkt Lithium als Platingift und ist daher vorzugsweise in besonders geringen Mengen in der erfindungsgemäßen Glaszusammensetzung enthalten.

Die erfindungsgemäße Glaszusammensetzung ist ferner vorzugsweise dadurch gekennzeichnet, dass die Glaszusammensetzung weniger als 2,0 Gew.-% Na oder weniger als 1,9 Gew.-% Na oder weniger als 1,8 Gew.-% Na oder weniger als 1,7 Gew.-% Na oder weniger als 1,6 Gew.-% Na oder weniger als 1,5 Gew.-% Na oder weniger als 1,4 Gew.-% Na oder weniger als 1,3 Gew.-% Na oder weniger als 1,2 Gew.-% Na oder weniger als 1,1 Gew.-% Na oder weniger als 1,0 Gew.-% Na oder weniger als 0,9 Gew.-% Na oder weniger als 0,8 Gew.-% Na oder weniger als 0,7 Gew.-% Na oder weniger als 0,6 Gew.-% Na oder weniger als 0,5 Gew.-% Na oder weniger als 0,4 Gew.-% Na oder weniger als 0,3 Gew.-% Na oder weniger als 0,2 Gew.-% Na oder weniger als 0,1 Gew.-% Na umfasst

Besonders bevorzugt ist, dass die erfindungsgemäße Glaszusammensetzung weniger als 2,0 Gew.-% Na oder weniger als 1,5 Gew.-% Na oder weniger als 1,0 Gew.-% Na umfasst (jeweils bestimmt mittels ICP-OES, bezogen auf das Gesamtgewicht der Glaszusammensetzung)

Insbesondere ist die erfindungsgemäße Glaszusammensetzung dadurch gekennzeichnet, dass die Glaszusammensetzung weniger als 1,5 Gew.-% Na umfasst (bestimmt mittels ICP-OES, bezogen auf das Gesamtgewicht der Glaszusammensetzung).

Die erfindungsgemäße Glaszusammensetzung ist ferner vorzugsweise dadurch gekennzeichnet, dass die Glaszusammensetzung weniger als 0,2 Gew.-% Li oder weniger als 0,15 Gew.-% Li oder weniger als 0,1 Gew.-% Li oder weniger als 0,05 Gew.-% Li umfasst (jeweils bestimmt mittels ICP-OES, bezogen auf das Gesamtgewicht der Glaszusammensetzung).

Folglich ist die erfindungsgemäße Glaszusammensetzung ferner vorzugsweise dadurch gekennzeichnet, dass die Glaszusammensetzung weniger als 1,5 Gew-% als Summe von Na und Li, bevorzugt weniger als 1,0 Gew-% als Summe von Na und Li, jeweils bestimmt mittels ICP-OES, bezogen auf das Gesamtgewicht der Glaszusammensetzung, umfasst.

Obwohl sich die Vermeidung von Lithium und Natrium in der Glaszusammensetzung als erfolgreicher Ansatz erwiesen hat, um den Polarisationseffekt auf ein Minimum zu reduzieren, kann das Auftreten des Polarisationseffekts alternativ experimentell bestimmt werden. Dazu kann eine Strom-Spannungs-Kurve eines passiven Bauelements mit der zu untersuchenden Glaszusammensetzung aufgenommen werden, wobei eine Anfangsspannung angelegt wird, die schrittweise bis zu einer Endspannung erhöht wird. Anschließend wird die Spannung, ausgehend von der Endspannung, auf den Anfangswert reduziert. Nimmt der dabei gemessene Strom beim Absenken der Spannung andere Werte an als beim Erhöhen der Spannung, wird dies in der Strom-Spannungs-Kurve in Form einer Hysterese sichtbar. Eine Hysterese in der Strom-Spannungs-Kurve weist daher auf einen Polarisationseffekt in der Glaszusammensetzung hin. Auch wenn im Idealfall keine Hysterese festgestellt werden kann, sind unter Umständen gewisse Abweichungen vom idealen Verhalten tolerierbar.

Als weiterer Hinweis darauf, ob eine Glaszusammensetzung den Polarisationseffekt in einem bestimmten Temperaturbereich begünstigt, können die Isolationswiderstände zwischen zwei Anschlussdrähten an einem passiven Bauelement ohne Leiterbahnen gemessen werden. Bei passiven Bauelementen mit geringen Widerständen, insbesondere mit Widerständen unter 500 Ohm, und insbesondere bei Heizern, ist das eine sinnvollere Möglichkeit, den Polarisationseffekt zu beurteilen.

Die erfindungsgemäße Glaszusammensetzung ist ferner vorzugsweise dadurch gekennzeichnet, dass die Glaszusammensetzung einen Polarisationseffekt von absolut kleiner 0,5 K bei Temperaturen von 500°C bis 550 °C, insbesondere kleiner 0,1 K bei Temperaturen von 500°C und/oder kleiner 0,3 K bei Temperaturen von 550°C aufweist.

Die vorliegende Erfindung betrifft ferner ein passives Bauelement, insbesondere Sensor, vorzugsweise Temperatursensor, oder Heizer.

Die vorliegende Erfindung betrifft ferner ein passives Bauelement, insbesondere Sensor, vorzugsweise Temperatursensor, oder Heizer, umfassend Anschlussdrähte und ein anorganisches Substrat, insbesondere Metalloxid-, Halbleiter- und/oder Glassubstrat.

Die vorliegende Erfindung betrifft ferner ein passives Bauelement, insbesondere Sensor, vorzugsweise Temperatursensor, oder Heizer, umfassend Anschlussdrähte und ein anorganisches Substrat, insbesondere Metalloxid-, Halbleiter- und/oder Glassubstrat, dadurch gekennzeichnet, dass die Anschlussdrähte durch die aufgetragene erfindungsgemäße Glaszusammensetzung zugentlastet sind.

Das Vereinzeln durch Brechen hat sich als besonders wirtschaftliches Verfahren für passive Bauelemente etabliert. Bei dieser Trennmethode hat es sich als vorteilhaft erwiesen, wenn Sollbruchstellen im Substrat vorhanden sind und somit ein einfaches Brechen, insbesondere bei harten Substraten, möglich ist.

Das erfindungsgemäße passive Bauelement ist ferner vorzugsweise, dadurch gekennzeichnet, dass das passive Bauelement durch Vereinzelung erhalten wurde, wobei das Vereinzeln ein Brechen, insbesondere an mindestens einer Sollbruchstelle, umfasst.

Auch wenn aus prozessökonomischer Sicht, dass Vereinzeln durch Brechen dem Sägen vorzuziehen ist, ist es mit einigen Herausforderungen verbunden geeignete Glaszusammensetzungen bereitzustellen, welche für diese Methode geeignet sind. Insbesondere das Auftreten von kritischer Rissbildung ist vorzugsweise auf ein Minimum zu reduzieren, um die Ausfallquote bei der Herstellung zu reduzieren.

Das erfindungsgemäße passive Bauelement ist ferner vorzugsweise, dadurch gekennzeichnet, dass die Glaszusammensetzung eine minimale kritische Rissbildung bei der Vereinzelung der passiven Bauelemente aufweist.

Im Sinne der vorliegenden Erfindung wird die Rissbildung anhand der Schnittwinkel charakterisiert. Beim Vereinzeln der passiven Bauelemente werden mindestens zwei passive Bauelemente durch Brechen voneinander getrennt. Die sich hierdurch gebildete Bruchfläche an einem der passiven Bauelement ist idealerweise senkrecht zur Substratebene, sodass die vier Schnittwinkel zwischen Bruchfläche und Substratebene alle 90° betragen. Da sich Nebenwinkel zu 180° ergänzen, ist es nicht nötig alle Winkel zu berücksichtigen, sondern die Qualifizierung der Rissbildung kann über die Angabe des kleinsten Schnittwinkels erfolgen. Unter realen Bedingungen brechen die passiven Bauelemente allerdings nicht ideal, sondern es kann zu erheblichen Abweichungen kommen. Diese Abweichungen sind tolerierbar, allerdings ist es vorteilhaft, wenn kritische Rissbildungen und Mikrorisse in der Glaszusammensetzung vermieden werden, sodass die Ausfallquote bei der Herstellung der passiven Bauelemente auf ein Minimum reduziert wird.

Unter kritischer Rissbildung wird daher verstanden, dass der kleinste Schnittwinkel zwischen der Bruchfläche und der Substratebene des passiven Bauelements weniger als 45° beträgt.

Es ist daher bevorzugt, dass der kleinste Schnittwinkel zwischen der Bruchfläche und der Substratebene des passiven Bauelements über 45°, bevorzugter 60°, weiter bevorzugt über 70° beträgt.

Unter Mikrorissen werden feine Risse in der Glaszusammensetzung zusammengefasst, die nur schwierig zu erkennen sind. Diese Mikrorisse können beim Brechen der Glaszusammensetzung auftreten und werden beispielsweise durch optische Kontrolle nach Abschluss der Herstellung der passiven Bauelemente erkannt.

Das erfindungsgemäße passive Bauelement ist ferner vorzugsweise, dadurch gekennzeichnet, dass das passive Bauelement ein Temperatursensor ist, der die Gültigkeit der Toleranzklasse F 0.3 (B) bei einer Temperatur von -70 °C bis 500 °C einhält.

Weitere bevorzugte Ausgestaltungen des erfindungsgemäßen passiven Bauelements erfüllen die Toleranzklasse F0.3 (B) bei einer Temperatur von -70 °C bis 500 °C.

Die vorliegende Erfindung betrifft ferner ein Verfahren zur Herstellung von passiven Bauelementen, insbesondere zur Herstellung des erfindungsgemäßen passiven Bauelements. Das Verfahren umfasst die folgenden Schritte, wobei die im Folgenden zitierte Reihenfolge der einzelnen Schritte nicht zwingend ist
- Bereitstellen eines anorganischen Substrats, insbesondere eines Metalloxid- oder Halbleitersubstrats oder eines Glassubstrats, auf dem mehrere Strukturen, insbesondere in einer Reihe, angeordnet sind,
- Ausbilden von Sollbruchstellen in dem anorganischen Substrat zwischen den Strukturen, insbesondere mittels eines Lasers und/oder mittels mechanischer Abtragung,
- Anbringen von mindestens einem Anschlussdraht an jede der Struktur,
- Bedecken der Anschlussdrähte durch Aufbringen eines durchgängigen Glaselements, insbesondere durch Aufbringen der erfindungsgemäßen Glaszusammensetzung, über die mehreren Strukturen,
- Vereinzelung der passiven Bauelemente durch das Brechen des anorganischen Substrats und des durchgängigen Glaselements an den Sollbruchstellen.

Die vorstehende Reihenfolge der Schritte ist nicht zwingend, sondern umfasst ferner alle technisch sinnvollen Reihenfolge. Es wäre zum Beispiel möglich die Sollbruchstellen erst nach dem Auftragen Aufbringen eines durchgängigen Glaselements auszubilden.

In einer bevorzugten Ausgestaltung des erfindungsgemäßen Verfahrens werden die Verfahrensschritte in der aufgelisteten Reihenfolge ausgeführt.

In einer anderen bevorzugten Ausgestaltung des erfindungsgemäßen Verfahrens, umfasst die Struktur eine siebgedruckte Glasschicht. Der Schritt des Bedeckens der Anschlussdrähte durch Aufbringen eines durchgängigen Glaselements wäre dann wie folgt ausgestaltet.
- Bedecken der strukturzugewandten Enden der Anschlussdrähte und zumindest anteiliges Bedecken der siebgedruckten Glasschicht durch Aufbringen eines durchgängigen Glaselements, insbesondere durch Aufbringen der erfindungsgemäßen Glaszusammensetzung, über die mehreren Strukturen, wobei die Strukturen zu 60%, bevorzugt zu 80%, besonders bevorzugt zu 100%, bedeckt sind. Weiterhin bevorzugt ist eine komplette Bedeckung des Bereichs der Anschlussdrähte über dem Substrat.

Durch diese bevorzugte Ausgestaltung des erfindungsgemäßen Verfahrens, geht die Grenzfläche zwischen dem Glaselement und der siebgedruckten Glasschicht in eine ungefähr 5 bis 20 µm dicke Durchmischungszone über. Dadurch wird eine besonders hohe Haftkraft zwischen dem Glaselement und der siebgedruckten Glasschicht erreicht. Dies ist vor allem bei der Herstellung passiver Bauelemente von Vorteil, da es die Gefahr minimiert, dass das Glaselement beim Vereinzeln durch Brechen der passiven Bauelemente abgesprengt wird. Weiterhin kann hierdurch die elektrische Durchschlagsfestigkeit des passiven Bauelements erhöht werden.

Alle bevorzugten Ausführungsformen und Definitionen für die erfindungsgemäßen passiven Bauelemente gelten analog für das erfindungsgemäße Verfahren.

Die vorliegende Erfindung betrifft ferner ein passives Bauelement erhältlich nach dem vorstehend beschriebenen Verfahren.

Die vorliegende Erfindung betrifft zudem die Verwendung einer Glaszusammensetzung, wie vorstehend beschrieben, zur Zugentlastung von Anschlussdrähten an passiven Bauelementen, insbesondere wie vorstehend beschrieben oder erhältlich nach dem vorstehend beschriebenen Verfahren.

In einer bevorzugten Ausgestaltung der erfindungsgemäßen Verwendung wurden die passiven Bauelemente durch Vereinzelung erhalten, wobei das Vereinzeln ein Brechen, insbesondere an Sollbruchstellen, umfasst.

Die vorstehend für die erfindungsgemäße Glaszusammensetzung und das erfindungsgemäße passive Bauelement aufgeführten bevorzugten Ausführungsformen gelten auch für das erfindungsgemäße Verfahren, das mit diesem Verfahren erhaltenen passive Bauelement und die Verwendung der Glaszusammensetzung.

### Beschreibung der Figuren

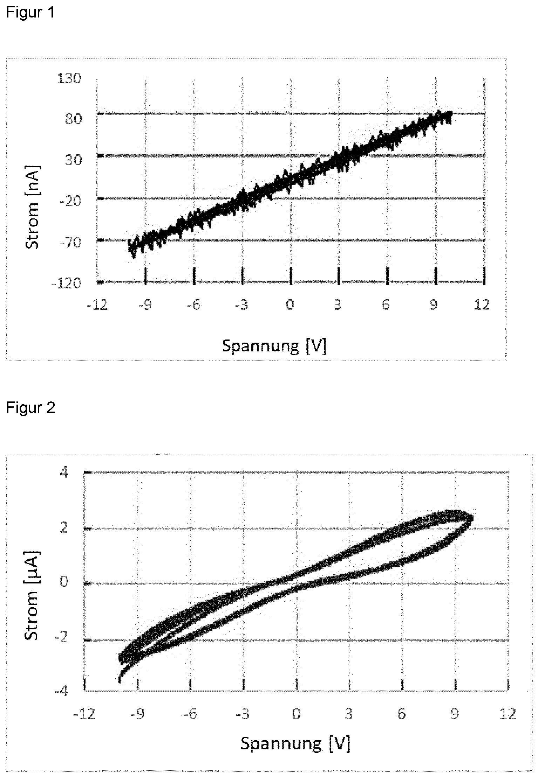

Figur 1 zeigt eine Stromspannungskurve zur Messung des Polarisationseffekts eines passiven Bauelements umfassend eine bleifreie Glaszusammensetzung mit einem niedrigen Gehalt an Lithium- und Natrium. Die Stromspannungskurve zeigt keine Hysterese, wodurch auf die Abwesenheit des Polarisationseffektes geschlossen werden kann.
Figur 2 zeigt eine Stromspannungskurve zur Messung des Polarisationseffekts eines passiven Bauelements umfassend eine bleifreie Glaszusammensetzung mit einem erhöhten Gehalt an Lithium- und Natriumionen. Die Stromspannungskurve zeigt eine Hysterese, wodurch auf das Vorhandensein des Polarisationseffektes geschlossen werden kann.

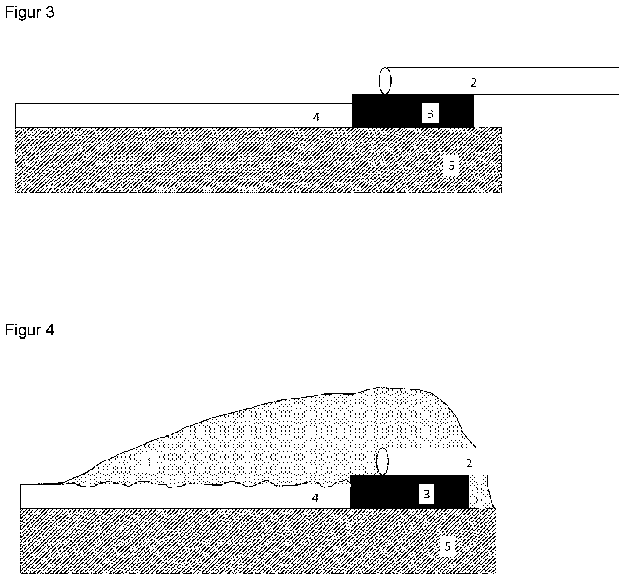

Figur 3 zeigt eine schematische Darstellung eines passiven Bauelementes ohne Glaselement zur Zugentlastung von Anschlussdrähten. Auf dem Substrat (5) befindet sich ein Anschlusspad (3) und eine siebgedruckte Glasschicht (4). An dem Anschlusspad (3) ist ein Anschlussdraht (2) befestigt.
Figur 4 zeigt eine schematische Darstellung eines erfindungsgemäßen passiven Bauelementes. Auf dem Substrat (5) befindet sich ein Anschlusspad (3) und eine siebgedruckte Glasschicht (4). An dem Anschlusspad (3) ist ein Anschlussdraht (2) befestigt, welcher durch eine Glaszusammensetzung (1) zugentlastet ist.

Die Erfindung wird nachfolgend anhand von nicht beschränkenden Beispielen näher erläutert.

### Beispiele

### Beispiel 1:

| Glaszusammensetzung 1 | Gew.% | Glaszusammensetzung 2 | Gew.% | Glaszusammensetzung 3 | Gew.% |
|---|---|---|---|---|---|
| SiO₂ | 47,7 | SiO₂ | 46,3 | SiO₂ | 30,2 |
| Al₂O₃ | 11,9 | Bi₂O₃ | 10,6 | Al₂O₃ | 14,6 |
| B₂O₃ | 10,8 | B₂O₃ | 8,8 | La₂O₃ | 13,9 |
| ZnO | 7,8 | ZnO | 8,1 | B₂O₃ | 12,8 |
| CoO | 5,8 | Al₂O₃ | 6,7 | ZnO | 11,2 |
| SrO | 5,8 | SrO | 6,1 | CaO | 4,4 |
| K₂O | 3,3 | CoO | 5,2 | CoO | 3,1 |
| BaO | 3,0 | K₂O | 3,4 | Nb₂O | 2,4 |
| Bi₂O₃ | 2,6 | BaO | 3,2 | K₂O | 2,2 |
| Na₂O | 1,0 | MgO | 1,1 | WO₃ | 1,7 |
| CaO | 0,2 | Na₂O | 1,0 | ZrO₂ | 1,0 |
| MgO | 0,1 | CaO | 0,2 | TiO₂ | 1,0 |
| Fe₂O₃ | 0,1 | Fe₂O₃ | 0,1 | Na₂O | 0,3 |
| TiO₂ | 0,0 | TiO₂ | 0,0 | MgO | 0,1 |
| Li₂O | 0,0 | Li₂O | 0,0 | BaO | 0,1 |
| ZrO₂ | 0,0 | ZrO₂ | 0,0 | Fe₂O₃ | 0,1 |
| F | 0,0 | PbO | 0,0 | Li₂O | 0,0 |
| PbO | 0,0 | La₂O₃ | 0,0 | PbO | 0,0 |
| La₂O₃ | 0,0 | F | 0,0 | Bi₂O₃ | 0,0 |
| Nb₂O | 0,0 | Nb₂O | 0,0 | F | 0,0 |
| WO₃ | 0,0 | WO₃ | 0,0 | SrO | 0,0 |

### Beispiel 2:

| Glaszusammensetzung 4 | Gew.% | Glaszusammensetzung 5 | Gew.% | Glaszusammensetzung 6 | Gew.% |
|---|---|---|---|---|---|
| SiO₂ | 47,4 | SiO₂ | 51,5 | SiO₂ | 46,3 |
| Al₂O₃ | 15,2 | Al₂O₃ | 17,8 | Al₂O₃ | 17,5 |
| ZnO | 12,0 | ZnO | 8,9 | B₂O₃ | 12,6 |
| CaO | 5,7 | CaO | 6,7 | CaO | 6,9 |
| B₂O₃ | 4,8 | B₂O₃ | 5,4 | ZnO | 4,6 |
| Bi₂O₃ | 4,3 | K₂O | 4,9 | Bi₂O₃ | 3,6 |
| K₂O | 4,1 | Li₂O | 4,1 | CoO | 3,1 |
| Li₂O | 3,5 | Na₂O | 0,4 | K₂O | 2,7 |
| CoO | 3,2 | Fe₂O₃ | 0,1 | Na₂O | 2,2 |
| Na₂O | 0,3 | MgO | 0,1 | Fe203 | 0,3 |
| Fe₂O₃ | 0,1 | TiO₂ | 0,0 | MgO | 0,2 |
| MgO | 0,1 | PbO | 0,0 | TiO₂ | 0,1 |
| TiO₂ | 0,0 | ZrO₂ | 0,0 | ZrO₂ | 0,0 |
| ZrO₂ | 0,0 | BaO | 0,0 | Li₂O | 0,0 |
| PbO | 0,0 | Bi₂O₃ | 0,0 | PbO | 0,0 |
| BaO | 0,0 | CoO | 0,0 | BaO | 0,0 |
| La₂O₃ | 0,0 | La₂O₃ | 0,0 | La₂O₃ | 0,0 |
| F | 0,0 | F | 0,0 | F | 0,0 |
| Nb₂O | 0,0 | NbzO | 0,0 | Nb₂O | 0,0 |
| SrO | 0,0 | SrO | 0,0 | SrO | 0,0 |
| WO3 | 0,0 | WO₃ | 0,0 | WO₃ | 0,0 |

| Glaszusammensetzung 7 | Gew.% | Glaszusammensetzung 8 | Gew.% | | |
|---|---|---|---|---|---|
| SiO₂ | 61,8 | SiO₂ | 59,1 | | |
| Al₂O₃ | 13,8 | Al₂O₃ | 12,9 | | |
| B₂O₃ | 7,9 | B₂O₃ | 10,2 | | |
| ZnO | 4,3 | ZnO | 5,1 | | |
| Bi₂O₃ | 4,3 | Na₂O | 4,4 | | |
| CoO | 3,1 | Bi₂O₃ | 4,3 | | |
| Na₂O | 2,4 | CoO | 3,1 | | |
| K₂O | 1,9 | BaO | 0,8 | | |
| CaO | 0,5 | CaO | 0,1 | | |
| Fe₂0₃ | 0,1 | Fe₂0₃ | 0,0 | | |
| ZrO₂ | 0,0 | MgO | 0,0 | | |
| MgO | 0,0 | K₂O | 0,0 | | |
| Ti0₂ | 0,0 | TiO₂ | 0,0 | | |
| PbO | 0,0 | ZrO₂ | 0,0 | | |
| BaO | 0,0 | PbO | 0,0 | | |
| La₂0₃ | 0,0 | La₂0₃ | 0,0 | | |
| Li₂O | 0,0 | Li₂O | 0,0 | | |
| F | 0,0 | F | 0,0 | | |
| Nb₂O | 0,0 | Nb₂O | 0,0 | | |
| SrO | 0,0 | SrO | 0,0 | | |
| WO₃ | 0,0 | WO₃ | 0,0 | | |

Die erfindungsgemäßen Glaszusammensetzungen 1 bis 3 gemäß Beispiel 1 sind bleifrei, weisen einen geringen Gehalt an Lithium und Natrium auf. Sie zeigen keine kritische Rissbildung beim Brechen, und weisen nur einen geringen Polarisationseffekt auf.

Die Glaszusammensetzungen 4 bis 8 gemäß Beispiel 2 sind zwar bleifrei und zeigen keine kritische Rissbildung beim Brechen, allerdings kommt es zu einem unerwünscht hohen Polarisationseffekt.

Die Ergebnisse der Polarisationsmessung und die Rissbildung beim Brechen der jeweiligen Glaszusammensetzung sind zur besseren Übersicht in den folgenden Tabellen zusammengetragen:

| Glaszusammensetzung | Bleifrei | Polarisationseffekt | Geringer Gehalt an Lithium und Natrium | Keine kritische Rissbildung beim Brechen |
|---|---|---|---|---|
| 1 | + | - | + | + |
| 2 | + | - | + | + |
| 3 | + | - | + | + |
| 4 | + | + | - | + |
| 5 | + | + | - | + |
| 6 | + | + | - | + |
| 7 | + | + | - | + |
| 8 | + | + | - | + |

Der Polarisationseffekt der Zusammensetzungen 1 bis 8 wurde gemäß der beschriebenen Messmethode bestimmt, wobei die jeweiligen Zusammensetzungen in Verbindung mit einem Pt 1000-Sensor gemessen wurden. Angegeben sind jeweils die gemessenen Mittelwerte von 2 Temperatursensoren mit der angegebenen Glaszusammensetzung.

| Glaszusammensetzung | Polarisationseffekt bei 500 °C /K |
|---|---|
| 1 | <0,1 |
| 2 | <0,1 |
| 3 | <0,05 |
| 4 | 1,52 |
| 8 | 0,76 |
| 6 | 0,57 |
| 7 | 1,72 |
| 8 | 7,07 |

Die erfindungsgemäßen Zusammensetzungen 1 bis 3 weisen einen geringeren Gehalt an Lithium und Natrium und einen geringen Polarisationseffekt auf.

Die Zusammensetzungen 4 und 5 weisen dagegen einen erhöhten Gehalt an Lithium und Natrium und einen erheblichen Polarisationseffekt auf. Ebenso die lithiumfreien Zusammensetzungen 6 bis 8 zeigen einen erhöhten Polarisationseffekt, da diese Zusammensetzungen einen erhöhten Gehalt an Natrium aufweisen.

### Beispiel 3

Darüber hinaus wurden die Isolationswiderstände zwischen zwei mit einer Glaszusammensetzung zugentlasteten Leiterdrähten an einem Temperatursensor ohne durchgängige Leiterbahn gemessen. Es wurde festgestellt, dass die Isolationswiderstände der Glaszusammensetzungen 1, 2 und 3 bei einer Temperaturänderung von 500°C auf 550°C stark abnehmen.

| Glaszusammensetzung | Isolationswiderstand bei 500 °C /MΩ | Isolationswiderstand bei 550 °C /MΩ |
|---|---|---|
| 1 | 55 | 33 |
| 2 | 42 | 23 |
| 3 | 288 | 109 |

## Patentansprüche

1. Glaszusammensetzung, insbesondere Fixiertropfen, zur Zugentlastung von Anschlussdrähten an passiven Bauelementen, insbesondere Sensoren, vorzugsweise Temperatursensoren, oder Heizern auf einem anorganischen Substrat, insbesondere Metalloxid-, Halbleiter- und/oder Glassubstrat, wobei die Glaszusammensetzung SiO₂, Al₂O₃, B₂O₃ und ZnO umfasst,
**dadurch gekennzeichnet, dass**
die Glaszusammensetzung, weniger als 1000 ppm Blei umfasst, und dass die Glaszusammensetzung weniger als 2 Gew.-% Na, weniger als 0,2 Gew.-% Li, und/oder weniger als 2 Gew-% als Summe von Na und Li umfasst,
jeweils gemessen mittels ICP, und bezogen auf das Gesamtgewicht der Glaszusammensetzung.
weniger als 2 Gew.-% Na, weniger als 0,2 Gew.-% Li, und/oder weniger als 2 Gew-% als Summe von Na und Li, und weniger als 1000 ppm Blei, jeweils gemessen mittels ICP, bezogen auf das Gesamtgewicht der Glaszusammensetzung, umfasst.

2. Glaszusammensetzung gemäß Anspruch 1,
**dadurch gekennzeichnet, dass**
die Glaszusammensetzung
von 20 bis 55 Gew.-%, bevorzugt von 25 bis 50 Gew.-%, Siliziumdioxid,
von 5 bis 15 Gew.-%, bevorzugt von 6 bis 14 Gew.-%, Boroxid, und
von 4 bis 18 Gew.-%, bevorzugt 5 bis 17 Gew.-%, Aluminiumoxid,
bezogen auf das Gesamtgewicht der Glaszusammensetzung, umfasst.

3. Glaszusammensetzung gemäß Anspruch 1 oder 2,
**dadurch gekennzeichnet, dass**
die Glaszusammensetzung
von 35 bis 55 Gew.-% Siliziumdioxid,
von 9 bis 14 Gew.-% Boroxid,
von 4 bis 7 Gew.-% Strontiumoxid,
von 2 bis 5 Gew.-% Kaliumoxid,
oder
von 35 bis 55 Gew.-% Siliziumdioxid,
von 8 bis 15 Gew.-% Bismutoxid,
von 6 bis 11 Gew.-% Boroxid,
von 4 bis 8 Gew.-% Strontiumoxid,
von 2 bis 6 Gew.-% Kaliumoxid,
oder
von 20 bis 55 Gew.-% Siliziumoxid und Lanthanoxid
von 11 bis 14 Gew.-% Boroxid,
von 3 bis 6 Gew.-% Calciumoxid,
jeweils bezogen auf das Gesamtgewicht der die Glaszusammensetzung, umfasst.

4. Glaszusammensetzung gemäß einem der vorhergehenden Ansprüche,
**dadurch gekennzeichnet, dass**
die Glaszusammensetzung weniger als weniger als 1,5 Gew-% als Summe von Na und Li, bevorzugt weniger als 1,0 Gew-% als Summe von Na und Li, jeweils bestimmt mittels ICP, bezogen auf das Gesamtgewicht der Glaszusammensetzung, umfasst.

5. Glaszusammensetzung gemäß einem der vorhergehenden Ansprüche,
**dadurch gekennzeichnet, dass**
die Glaszusammensetzung einen Polarisationseffekt von absolut kleiner 0,5 K bei Temperaturen von 500°C bis 550 °C, insbesondere kleiner 0,1 K bei Temperaturen von 500°C und/oder kleiner 0,3 K bei Temperaturen von 550°C aufweist.

6. Passives Bauelement, insbesondere Sensor, vorzugsweise Temperatursensor, oder Heizer, umfassend Anschlussdrähte und ein anorganisches Substrat, insbesondere Metalloxid-, Halbleiter- und/oder Glassubstrat,
**dadurch gekennzeichnet, dass**
die Anschlussdrähte durch eine aufgetragene Glaszusammensetzung gemäß einem der Ansprüche 1 bis 5 zugentlastet sind.

7. Passives Bauelement gemäß Anspruch 6
**dadurch gekennzeichnet, dass**
das passive Bauelement durch Vereinzelung erhalten wurde, wobei das Vereinzeln ein Brechen, insbesondere an mindestens einer Sollbruchstelle, umfasst.

8. Passives Bauelement gemäß Anspruch 6 oder 7,
**dadurch gekennzeichnet, dass**
die Glaszusammensetzung eine minimale kritische Rissbildung bei der Vereinzelung der passiven Bauelemente aufweist.

9. Passives Bauelement gemäß einem der Ansprüche 6 bis 8,
**dadurch gekennzeichnet, dass**
das passive Bauelement ein Temperatursensor ist, der die Gültigkeit der Toleranzklasse F 0.3 (B) bei einer Temperatur von -70 °C bis 500 °C einhält.

10. Verfahren zur Herstellung von passiven Bauelementen, insbesondere nach einem der Ansprüche 6 bis 9, umfassend die Schritte:
- Bereitstellen eines anorganischen Substrats, insbesondere eines Metalloxid- oder Halbleitersubstrats oder eines Glassubstrats, auf dem mehrere Strukturen, insbesondere in Reihe, angeordnet sind,
- Ausbilden von Sollbruchstellen in dem anorganischen Substrat zwischen den Strukturen, insbesondere mittels eines Lasers und/oder mittels mechanischer Abtragung,
- Anbringen von mindestens einem Anschlussdraht an jedem der Strukturen,
- Bedecken der Anschlussdrähte durch Aufbringen eines durchgängigen Glaselements, insbesondere umfassend eine Glaszusammensetzung gemäß einem der Ansprüche 1 bis 5, über die mehreren Strukturen,
- Vereinzelung der passiven Bauelemente durch das Brechen des anorganischen Substrats und des durchgängigen Glaselements an den Sollbruchstellen.

11. Passives Bauelement, erhältlich durch das Verfahren nach Anspruch 10.

12. Verwendung einer Glaszusammensetzung nach einem der Ansprüche 1 bis 5 zur Zugentlastung von Anschlussdrähten an passiven Bauelementen, insbesondere gemäß einem der Ansprüche 6 bis 9 oder Anspruch 11.

13. Verwendung gemäß Anspruch 12,
**dadurch gekennzeichnet, dass**,
die passiven Bauelemente durch Vereinzelung erhalten wurde, wobei das Vereinzeln der ein Brechen, insbesondere an Sollbruchstellen, umfasst.
